# EUROPÄISCHE PATENTSCHRIFT

(11) **EP 1 797 736 B1**
(45) Veröffentlichungstag und Bekanntmachung des Hinweises auf die Patenterteilung: **12.03.2008**
(21) Anmeldenummer: 05774019.3
(22) Anmeldetag: 04.08.2005
(51) Int. Cl.: H04Q 7/38

(54) **VERFAHREN ZUM AUFBAU EINER VERBINDUNG ZWISCHEN EINER BASISSTATION UND EINEM FUNKKOMMUNIKATIONSENDGERÄT**
METHOD FOR SETTING UP A CONNECTION BETWEEN A BASE STATION AND A RADIO COMMUNICATION TERMINAL
PROCEDE POUR ETABLIR UNE COMMUNICATION ENTRE UNE STATION DE BASE ET UN TERMINAL DE RADIOCOMMUNICATION

(30) Priorität: 24.08.2004 EP 04020056
(43) Veröffentlichungstag der Anmeldung: 20.06.2007
(73) Patentinhaber: Nokia Siemens Networks GmbH & Co. KG, 81541 München (DE)
(72) Erfinder: FRANZEN, Michael, 46395 Bocholt (DE); OBERMANNS, Sebastian, 46395 Bocholt (DE); SCHMIDT, Malte, 46397 Bocholt (DE)
(86) Internationale Anmeldenummer: PCT/EP2005/053843
(87) Internationale Veröffentlichungsnummer: WO 2006/021497

(56) Entgegenhaltungen:
- WO-A1-20/04036791
- PRAMOD VISWANATH ET AL.: "Opportunistic Beamforming Using Dumb Antennas" IEEE TRANSACTIONS ON INFORMATION THEORY, Bd. 48, Nr. 6, Juni 2002 (2002-06), Seiten 1277-1294, XP002314708 in der Anmeldung erwähnt

## Beschreibung

Die Erfindung betrifft ein Verfahren zum Aufbau einer Verbindung zwischen einer Basisstation und einem Funkkommunikationsendgerät, wobei die Basisstation über eine Antenne ein Testsignal an diejenigen Funkkommunikationsendgeräte überträgt, die der Basisstation zur Funkversorgung zugeordnet sind.

Es sind so genannte "Opportunistic Beamforming"-Verfahren bekannt, bei denen beispielsweise von einer Basisstation ein Testsignal an zugeordnete Mobilstationen ausgesendet wird. Die jeweiligen Mobilstationen bewerten basierend auf dem Testsignal jeweilige Empfangsbedingungen und melden diese an die Basisstation zurück. Nachfolgend wird zwischen der Basisstation und derjenigen Mobilstation eine Verbindung aufgebaut, die die beste Empfangsbedingung aufweist. Die Übertragung des Testsignals mit nachfolgender Auswahl der Mobilstation erfolgt im Rahmen eines so genannten "Probing"-Zeitabschnitts.

Derartige "Opportunistic Beamforming"-Verfahren werden derzeit für eine Verwendung bei Mobilfunknetzen der vierten Generation untersucht und bieten den Vorteil eines erhöhten Diversity-Systemgewinns. Nähere Erläuterungen dazu sind beispielsweise der Druckschrift "Opportunistic Beamforming Using Dumb Antennas", P. Viswanath, IEEE Transactions On Information Theory, Vol. 48, No. 6, June 2002, Seiten 1277 - 1294, entnehmbar.

Derzeit existieren nur wenige Ansätze über die Art und Weise der Rückmeldung der an den Mobilstationen gemessenen Empfangsbedingungen an die Basisstation. Denkbar nahe liegend wäre es, dass die einzelnen Mobilstationen über jeweils zugewiesene Funkübertragungsressourcen die gemessenen Empfangsbedingungen an die Basisstation zurückmelden. Dieses Verfahren hat jedoch den Nachteil, eine größere Anzahl an Funkübertragungsressourcen zu binden, die somit nicht mehr für durchzuführende Nutzdatenübertragungen zur Verfügung stehen würde.

Es ist daher Aufgabe der vorliegenden Erfindung, ein Verfahren zum Aufbau einer Verbindung zwischen einer Basisstation und einem Funkkommunikationsendgerät anzugeben, bei dem Funkkommunikationsendgeräte an eine zugeordnete Basisstation gemessene Empfangsbedingungen mit nur geringem Aufwand an Funkübertragungsressourcen zurückmelden können.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren wird durch jede Mobilstation bzw. durch jedes Funkkommunikationsendgerät ein Qualitätswert verwendet, um basierend auf einem von einer Basisstation gesendeten Testsignal jeweilige Empfangsbedingung zu bewerten.

Dieser Qualitätswert wird durch eine binäre Symbolfolge, beispielsweise bestehend aus einer Folge logischer "0" und logischer "1" Werte dargestellt. Beispielsweise wird der Wert logisch "1" als erster Symbolwert und der Wert logisch "0" als zweiter Symbolwert bezeichnet.

Die Mobilstationen melden die Symbolwerte ihrer jeweiligen Qualitätswerte zeitsynchron und beginnend bei einer vorbestimmten Symbolposition wie folgt zur Basisstation zurück:

Ein betrachtetes Funkkommunikationsendgerät meldet einen Symbolwert zurück, wenn dieser dem ersten Symbolwert - hier logisch "1" - entspricht.

Für den Fall, dass ein zurückzumeldendes Symbol dem zweiten Symbolwert - hier logisch "0" - entspricht, überwacht das betrachtete Funkkommunikationsendgerät die Symbolwert-Zurückmeldung von weiteren Funkkommunikationsendgeräten und beendet die eigene Symbolwert-Zurückmeldung dann, wenn durch die weiteren Funkkommunikationsendgeräte logische "1" Symbolwerte zurückgemeldet werden. Ist dies jedoch nicht der Fall, so setzt das betrachtete Funkkommunikationsendgerät die eigene Symbolwert-Zurückmeldung fort.

Wird während der Überwachung durch zumindest ein weiteres Funkkommunikationsendgerät eine logische "1" übertragen, so weist zumindest dieses eine weitere Funkkommunikationsendgerät bessere Empfangsbedingungen auf, als das betrachtete Funkkommunikationsendgerät - sofern die Übertragung bei der Symbolposition gestartet wird, die einem so genannten "Most Significant Bit, MSB" mit zugeordnetem maximalen Wert entspricht.

Diese Art der Symbolzurückmeldung erfolgt vorteilhafterweise über einen gemeinsamen Rückkanal, der von allen Funkkommunikationsendgeräten gemeinsam genutzt wird.

Ein bis zuletzt zurückmeldendes Funkkommunikationsendgerät weist die besten Empfangsbedingungen des Testsignals auf. Zu diesem Funkkommunikationsendgerät wird dann eine Funkverbindung mit der Basisstation aufgebaut.

Der Aufbau der Funkverbindung erfolgt beispielsweise für eine Übertragung von Nutzdaten bzw. Nutzdatenpaketen im Rahmen einer bereits bestehenden Paketdatenverbindung oder für einen Austausch von Steuerungssignalen während einer so genannten Initialisierungsphase, während der Informationen bzw. Steuersignale zwischen der Basisstation und dem Funkkommunikationsendgerät übertragen werden, ohne dabei bereits Nutzdaten auszutauschen.

Durch die erfindungsgemäße Art der Zurückmeldung des Qualitätswerts wird eine schnelle Auswahl eines Funkkommunikationsendgeräts seitens der Basisstation ermöglicht.

Durch die vorteilhafte Verwendung nur eines gemeinsamen Rückkanals werden Funkübertragungsressourcen eingespart.

Durch die vorteilhafte Verwendung einer Übertragung eines vorbekannten Signals zur Zurückmeldung des ersten Symbolwerts wird zusätzlich Bandbreite eingespart und störende Interferenzen in benachbarten Funkzellen werden vermieden bzw. reduziert. Ein derartiges Signal könnte beispielsweise als Meldesignal geringer Bandbreite realisiert werden. Vorteilhafterweise wird die jeweilige Bandbreite für jede Basisstation von benachbarten Funkzellen jeweils individuell gewählt.

Die vorliegende Erfindung wird anhand einer Zeichnung näher erläutert. Dabei zeigt:
- FIG 1: das erfindungsgemäße Verfahren anhand eines Funkkommunikationssystems mit einer Basisstation und mit mehreren Funkkommunikationsendgeräten, und
- FIG 2: eine vereinfachte Darstellung eines "Opportunistic Beamforming"-Verfahrens, bei dem das erfindungsgemäße Verfahren einsetzbar ist.

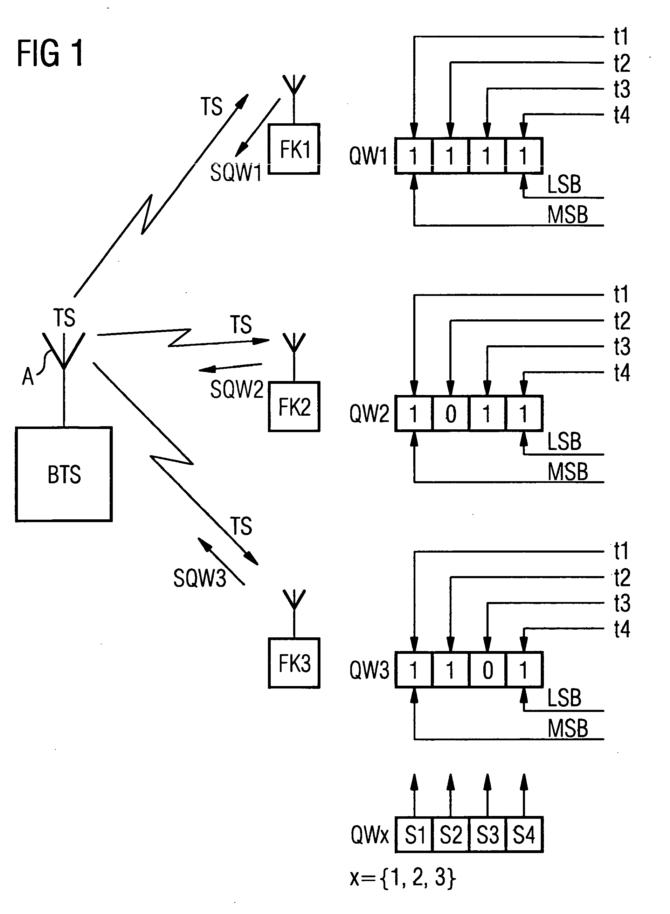

FIG 1 zeigt das erfindungsgemäße Verfahren anhand eines Funkkommunikationssystems mit einer Basisstation BTS und mit mehreren Funkkommunikationsendgeräten FK1 bis FK3.

Seitens der Basisstation BTS wird über eine Antenne A ein Testsignal TS an Funkkommunikationsendgeräte FK1 bis FK3 ausgesendet, die der Basisstation BTS zur Funkversorgung zugeordnet sind.

Jedes einzelne Funkkommunikationsendgerät FK1 bis FK3 empfängt das Testsignal TS und bewertet die Übertragung des Testsignals, indem es einen entsprechenden Qualitätswert QW1 bis QW3 zuordnet.

Seitens eines ersten Funkkommunikationsendgeräts FK1 wird ein C/I-Wert bestimmt, der als erster Qualitätswert QW1 durch binäre Symbole S1 bis S4 dargestellt wird. Der erste Qualitätswert QW1 weist als binäre Symbole S1 bis S4 eine Symbolfolge "1 1 1 1" auf, wobei das Symbol S1="1" als so genanntes "Most Significant Bit, MSB" und das Symbol S4="1" als so genanntes "Least Significant Bit, LSB" bezeichnet wird.

Seitens eines zweiten Funkkommunikationsendgeräts FK2 wird ein C/I-Wert bestimmt, der als zweiter Qualitätswert QW2 durch binäre Symbole S1 bis S4 dargestellt wird. Der zweite Qualitätswert QW2 weist als binäre Symbole S1 bis S4 eine Symbolfolge "1 0 1 1" auf, wobei das Symbol S1="1" als so genanntes "Most Significant Bit, MSB" und das Symbol S4="1" als so genanntes "Least Significant Bit, LSB" bezeichnet wird.

Seitens eines dritten Funkkommunikationsendgeräts FK3 wird ein C/I-Wert bestimmt, der als dritter Qualitätswert QW3 durch binäre Symbole S1 bis S4 dargestellt wird. Der dritte Qualitätswert QW3 weist als binäre Symbole S1 bis S4 eine Symbolfolge "1 1 0 1" auf, wobei das Symbol S1="1" als so genanntes "Most Significant Bit, MSB" und das Symbol S4="1" als so genanntes "Least Significant Bit, LSB" bezeichnet wird.

Nachfolgend wird bei den binär dargestellten Qualitätswerte QW1 bis QW3 der Symbolwert logisch "1" als erster Symbolwert und der Symbolwert logisch "0" als zweiter Symbolwert bezeichnet.

Die drei Funkkommunikationsendgeräte FK1 bis FK3 beginnen nun zu einem ersten Zeitpunkt t1 damit, zeitsynchron und beginnend beim "Most Significant Bit, MSB" Symbolwerte des jeweiligen Qualitätswerts QW1 bis QW3 an die Basisstation zurückzumelden. Die Zurückmeldung erfolgt unter Verwendung von vorbekannten Signalen SQW1 bis SQW3.

Das erste Funkkommunikationsendgerät FK1 meldet den Symbolwert "1" des ersten Symbols S1 zurück. Das zweite Funkkommunikationsendgerät FK2 meldet den Symbolwert "1" des ersten Symbols S1 zurück. Das dritte Funkkommunikationsendgerät FK3 meldet den Symbolwert "1" des ersten Symbols S1 zurück.

Zu einem zweiten Zeitpunkt t2 meldet das erste Funkkommunikationsendgerät FK1 den Symbolwert "1" des zweiten Symbols S2 zurück, während das dritte Funkkommunikationsendgerät FK3 den Symbolwert "1" des zweiten Symbols S2 zurückmeldet.

Das zweite Funkkommunikationsendgerät FK2 meldet den Symbolwert "0" des Symbols S2 nicht zurück, da dieser dem zweiten Symbolwert entspricht. Stattdessen überwacht das zweite Funkkommunikationsendgerät FK2, ob zum zweiten Zeitpunkt t2 andere Funkkommunikationsendgeräte Symbole mit zugeordnetem ersten Symbolwert zurückmelden. Dies ist beim ersten Funkkommunikationsendgerät FK1 und beim dritten Funkkommunikationsendgerät FK3 der Fall, so dass diese beiden Funkkommunikationsendgeräte FK1, FK3 jeweils bessere Empfangsbedingungen aufweisen müssen. Dies ergibt sich aus dem den binären Symbolen S1 bis S4 jeweils zugeordnetem Wert. So repräsentiert bekanntermaßen das "Most Significant Bit, MSB" einen Wert = 2³, während das "Least Significant Bit, LSB" einen Wert = 2⁰ repräsentiert. Das zweite Funkkommunikationsendgerät FK2 beendet nun die Symbolwert-Zurückmeldung des zweiten Qualitätswerts QW2.

Zu einem dritten Zeitpunkt t3 meldet das erste Funkkommunikationsendgerät FK1 den Symbolwert "1" des dritten Symbols S3 zurück. Das dritte Funkkommunikationsendgerät FK3 meldet den Symbolwert "0" des Symbols S3 nicht zurück, da dieser dem zweiten Symbolwert entspricht.

Stattdessen überwacht das dritte Funkkommunikationsendgerät FK3, ob zum dritten Zeitpunkt t3 andere Funkkommunikationsendgeräte Symbole mit zugeordnetem ersten Symbolwert zurückmelden. Dies ist nur noch beim ersten Funkkommunikationsendgerät FK1 der Fall, so dass dieses eine bessere Empfangsbedingung aufweisen muss. Das dritte Funkkommunikationsendgerät FK3 beendet nun die Symbolwert-Zurückmeldung des dritten Qualitätswerts QW3.

Bereits jetzt ist es seitens der Basisstation BTS möglich, eine Verbindung mit dem verbliebenen ersten Funkkommunikationsendgerät FK1 aufzubauen.

In einer vorteilhaften Weiterbildung jedoch wird noch die Übertragung des letzten Symbolwerts "1" des vierten Symbols S4 des ersten Funkkommunikationsendgeräts FK1 abgewartet, da der vollständig übermittelte erste Qualitätswert QW1 als gemessener C/I-Wert für die einzurichtende Verbindung im Rahmen einer Sendeleistungssteuerung verwendbar ist.

In einer vorteilhaften Weiterbildung übermittelt das erste Funkkommunikationsendgerät FK1 ohne eine Bestätigung seitens der Basisstation BTS abzuwarten, eine dem ersten Funkkommunikationsendgerät FK1 individuell zugeordnete Teilnehmeradresse an die Basisstation.

Für den hier nicht dargestellten Fall, dass der erste Qualitätswert QW1 eine Symbolfolge "1 1 0 1" aufweist, der zweite Qualitätswert QW2 wie vorher die Symbolfolge "1 0 1 1" aufweist und der dritte Qualitätswert QW3 eine Symbolfolge "1 1 0 0" aufweist, erfolgt die Zurückmeldung der Symbolwerte der ersten und der zweiten Symbole S1, S2 sowie die Beendigung der Symbolwert-Zurückmeldung seitens des zweiten Funkkommunikationsendgeräts FK2 wie vorstehend beschrieben.

Zum dritten Zeitpunkt t3 meldet das erste Funkkommunikationsendgerät FK1 den Symbolwert "0" des dritten Symbols S3 nicht zurück, da dieser dem zweiten Symbolwert entspricht. Statt dessen überwacht nun das erste Funkkommunikationsendgerät FK1, ob von weiteren Funkkommunikationsendgeräten - hier dem dritten Funkkommunikationsendgerät FK3 - ein erster Symbolwert "1" an die Basisstation BTS zurückgemeldet wird. Da dies nicht der Fall ist, meldet das erste Funkkommunikationsendgerät FK1 den Symbolwert "0" des dritten Symbols S3 zurück und/oder setzt die Zurückmeldung mit nachfolgenden Symbolwerten fort. Das erste Funkkommunikationsendgerät FK1 kann in diesem Fall davon ausgehen, dass alle noch an der Rückmeldung beteiligten Funkkommunikationsendgeräte den Symbolwert "0" zurückgemeldet haben.

Die Alternative ergibt sich daraus, dass anstelle der Zurückmeldung des Symbolwerts "0" es auch möglich ist, dass seitens der Basisstation BTS für den Symbolwert des dritten Symbols S3 der logische Wert "0" zum dritten Zeitpunkt t3 vorausgesetzt wird.

Zum dritten Zeitpunkt t3 meldet das dritte Funkkommunikationsendgerät FK3 den Symbolwert "0" des dritten Symbols S3 nicht zurück, da dieser dem zweiten Symbolwert entspricht. Statt dessen überwacht auch das dritte Funkkommunikationsendgerät FK3, ob von weiteren Funkkommunikationsendgeräten - hier dem ersten Funkkommunikationsendgerät FK1 - ein erster Symbolwert an die Basisstation BTS zurückgemeldet wird. Da dies nicht der Fall ist, meldet auch das dritte Funkkommunikationsendgerät FK3 den Symbolwert "0" des dritten Symbols S3 zurück und/oder setzt die Zurückmeldung mit nachfolgenden Symbolwerten fort. Das dritte Funkkommunikationsendgerät FK3 kann in diesem Fall davon ausgehen, dass alle noch an der Rückmeldung beteiligten Funkkommunikationsendgeräte den Symbolwert "0" zurückgemeldet haben.

Die Alternative ergibt sich daraus, dass anstelle der Zurückmeldung des Symbolwerts "0" es auch möglich ist, dass seitens der Basisstation BTS für den Symbolwert des dritten Symbols S3 der logische Wert "0" für den dritten Zeitpunkt t3 vorausgesetzt wird.

Zum vierten Zeitpunkt t4 meldet das erste Funkkommunikationsendgerät FK1 den Symbolwert "1" des vierten Symbols S4 zurück. Das dritte Funkkommunikationsendgerät FK3 meldet den Symbolwert "0" des vierten Symbols S4 nicht zurück, da dieser dem zweiten Symbolwert entspricht.

Stattdessen überwacht das dritte Funkkommunikationsendgerät FK3, ob zum vierten Zeitpunkt t4 andere Funkkommunikationsendgeräte Symbole mit zugeordnetem ersten Symbolwert zurückmelden. Dies ist nur noch beim ersten Funkkommunikationsendgerät FK1 der Fall, so dass dieses eine bessere Empfangsbedingung aufweisen muss. Entsprechend beendet das dritte Funkkommunikationsendgerät FK3 die Symbolwert-Zurückmeldung, bzw. wird eine Verbindung zwischen der Basisstation BTS und dem verbleibenden ersten Funkkommunikationsendgerät FK1 aufgebaut.

Neben der hier geschilderten Verwendung eines Träger/Interferenz-Werts C/I ist es auch möglich, einen Nutzsignal/Störsignal-Abstand oder ähnliche Qualitätswerte zu verwenden.

Für den hier nicht dargestellten Fall, dass während eines ersten Durchgangs zumindest zwei Funkkommunikationsendgeräte einen identischen Qualitätswert bestimmen und damit gleiche Empfangsbedingungen beim Testsignalempfang aufweisen, sind folgende Weiterbildungen möglich:

In einer ersten Ausgestaltung der Erfindung wird die Zurückmeldung von Qualitätswertsymbolen in einem zweiten Durchgang durchgeführt, wobei seitens der betroffenen Funkkommunikationsendgeräte eine jeweilige individuelle Zufallszahl gewählt und diese als zurückzumeldender Qualitätswert verwendet wird.

In einer zweiten Ausgestaltung ist es möglich, eine Prioritätszahl oder eine Adresse zu verwenden, die jedem Funkkommunikationsendgerät individuell zugeordnet ist, im zweiten Durchgang als Qualitätswert zurückzumelden.

Um eine weitere Fairness zu realisieren, ist es auch möglich, die Prioritätszahl zeitlich wechselnd um einen vorbestimmten Offset zu verändern, um bei einem weiteren Durchgängen bislang benachteiligte Funkkommunikationsendgeräte oder Mobilstationen nun zu bevorzugen.

Basierend auf diesem zweiten Durchgang wird dann der Verbindungsaufbau durchgeführt.

Die jeweiligen Symbolwerte werden während einer so genannten Bitzeitdauer zurückgemeldet. Diese ist dabei derart festzulegen, dass die zurückgemeldeten Symbolwerte sowohl seitens der Basisstation als auch seitens der empfangenden Funkkommunikationsendgeräte eindeutig detektierbar sind.

In einer nicht dargestellten weiteren vorteilhaften Weiterbildung wird seitens der Basisstation BTS zusammen mit dem Testsignal TS eine zusätzliche Information übertragen. Diese Information definiert, für welches Funkkommunikationsendgerät überhaupt Nachrichten seitens der Basisstation vorliegen. Bei dieser Ausgestaltungsform melden dann nur diejenigen Funkkommunikationsendgeräte ihre jeweiligen Qualitätswertsymbole zurück, die durch die Information definiert sind.

Anstelle der Zurückmeldung unter Verwendung eines vorbekannten Signals über einen gemeinsam verwendeten Funkübertragungskanal bzw. über eine gemeinsam verwendete Funkübertragungsressource ist es auch möglich, die jeweiligen Qualitätswertsymbole unter Verwendung von Vielfachzugriffverfahren an die Basisstation zurückzumelden. Beispielsweise käme hier ein CDMA-, ein TDMA- oder ein FDMA-Vielfachzugriffsverfahren oder Kombinationen daraus in Frage.

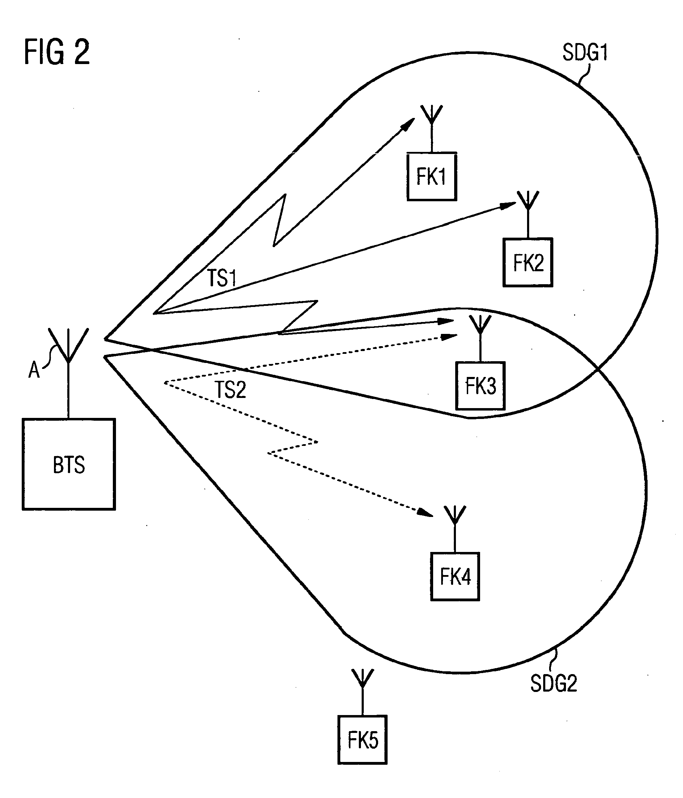

FIG 2 zeigt eine vereinfachte Darstellung eines "Opportunistic Beamforming"-Verfahrens, bei dem das erfindungsgemäße Verfahren einsetzbar ist.

Dabei wird seitens einer Basisstation BTS ein erstes Testsignal TS1 über die Antenne A abgestrahlt, wobei zugeordnete Funkkommunikationsendgeräte FK1 bis FK3 über ein erstes Strahlungsdiagramm SDG1 das erste Testsignal TS1 empfangen.

Es wird angenommen, dass unter Verwendung des erfindungsgemäßen Verfahrens ein erstes Funkkommunikationsendgerät FK1 für eine Verbindung mit der Basisstation BTS ausgewählt wird. Entsprechend weist ein drittes Funkkommunikationsendgerät FK3 eine schlechtere Empfangsqualität des ersten Testsignals TS1 auf, als das erste Funkkommunikationsendgerät FK1.

Seitens der Basisstation BTS wird dann ein zweites Testsignal TS2 über die Antenne A abgestrahlt, wobei zugeordnete Funkkommunikationsendgeräte FK3 und FK4 über ein zweites Strahlungsdiagramm SDG2 das zweite Testsignal TS2 empfangen.

Durch die Verwendung des zweiten Strahlungsdiagramms SDG2 und/oder durch das zweite Testsignal TS2 wird das dritte Funkkommunikationsendgerät FK3 nun eine neue Empfangssituation aufweisen.

Wird nun das erfindungsgemäße Verfahren erneut entsprechend durchgeführt, so ist es möglich, nun das dritte Funkkommunikationsendgerät FK3 für eine Verbindung mit der Basisstation BTS auszuwählen, sofern diese eine bessere Empfangsqualität des zweiten Testsignals TS2 im Vergleich mit einem vierten Funkkommunikationsendgerät FK4.

Es ist nun möglich, Testsignale über individuell zugeordnete Strahlungsdiagramme periodisch wiederholt zu senden. Sofern sich die Strahlungsdiagramme zumindest teilweise überlappen, wird jedes einzelne Funkkommunikationsendgerät mit großer Wahrscheinlichkeit zumindest einmal bevorzugt bedient werden.

## Patentansprüche

1. Verfahren zum Aufbau einer Verbindung zwischen einer Basisstation und einem Funkkommunikationsendgerät,
- bei dem die Basisstation ein Testsignal an diejenigen Funkkommunikationsendgeräte überträgt, die der Basisstation zur Funkversorgung zugeordnet sind,
- bei dem jedes empfangende Funkkommunikationsendgerät der Testsignal-Übertragung einen Qualitätswert zuordnet, dessen binäre Symbole einen ersten und einen zweiten Symbolwert umfassen,
- bei dem die Funkkommunikationsendgeräte zeitsynchron und beginnend bei einer vorbestimmten Symbolposition Symbolwerte der jeweils zugeordneten Qualitätswerte wie folgt zur Basisstation zurückmelden:
a. dass ein betrachtetes Funkkommunikationsendgerät einen Symbolwert zurückmeldet, wenn dieser dem ersten Symbolwert entspricht,
b. dass das betrachtete Funkkommunikationsendgerät für den Fall eines zurückzumeldenden zweiten Symbolwerts die Symbolwert-Zurückmeldung von weiteren Funkkommunikationsendgeräten überwacht, wobei das betrachtete Funkkommunikationsendgerät die Symbolwert-Zurückmeldung beendet, wenn durch die weiteren Funkkommunikationsendgeräte erste Symbolwerte zurückgemeldet werden, und ansonsten das betrachtete Funkkommunikationsendgerät die Symbolwert-Zurückmeldung fortsetzt,
- bei dem eine Verbindung zwischen der Basisstation und demjenigen Funkkommunikationsendgerät aufgebaut wird, das als letztes einen Symbolwert, der dem ersten Symbolwert entspricht, zur Basisstation zurückgemeldet hat.

2. Verfahren nach Anspruch 1, bei dem als Qualitätswert ein Nutzsignal-Störsignalabstand und/oder ein Trägersignal-Interferenzsignalabstand verwendet wird, wobei das Testsignal als Nutzsignal und/oder als Trägersignal verwendet wird.

3. Verfahren nach Anspruch 1, bei dem das Testsignal der Basisstation periodisch wiederholt gesendet wird.

4. Verfahren nach Anspruch 3, bei dem jedem Testsignal jeweils ein individuelles Strahlungsdiagramm einer Basisstationsantenne zugeordnet wird und sich Versorgungsbereiche der Strahlungsdiagramme zumindest teilweise überlappen.

5. Verfahren nach Anspruch 3, bei dem das Testsignal als Teil eines Opportunistic-Beamforming-Verfahrens gesendet wird.

6. Verfahren nach Anspruch 1, bei dem für den Fall, dass zumindest zwei Funkkommunikationsendgeräte der Testsignal-Übertragung einen identischen ersten Qualitätswert zuordnen, die entsprechenden Funkkommunikationsendgeräte als zweiten Qualitätswert jeweils eine Zufallszahl oder eine Prioritätszahl oder eine Adresse wählen und diesen in einem zweiten Verfahrensdurchgang symbolweise zur Basisstation zurückmelden und der Verbindungsaufbau basierend auf den zurückgemeldeten Symbolen des zweiten Qualitätswerts erfolgt.

7. Verfahren nach einem der vorhergehenden Ansprüche, bei dem jedes Funkkommunikationsendgerät den jeweiligen ersten Symbolwert während einer Bitzeitdauer an die Basisstation zurückmeldet, wobei die Bitzeitdauer derart gewählt wird, dass sowohl der Empfang des zurückgemeldeten Symbolwerts seitens der Basisstation als auch seitens der empfangenden Funkkommunikationsendgeräte gewährleistet wird.

8. Verfahren nach einem der vorhergehenden Ansprüche,
- bei dem die Basisstation zusammen mit dem Testsignal eine Information überträgt, die definiert, für welche Funkkommunikationsendgeräte eine Nachrichtenübertragung vorliegt, und
- bei dem nur die in der Information definierten Funkkommunikationsendgeräte den Qualitätswert symbolweise zurückmelden.

9. Verfahren nach einem der vorhergehenden Ansprüche, bei dem die Zurückmeldung des ersten Symbolwerts unter Verwendung eines Vielfachzugriffsverfahrens durchgeführt wird.

10. Verfahren nach einem der vorhergehenden Ansprüche, bei dem die Zurückmeldung des ersten Symbolwerts durch eine Übertragung eines vorbekannten Signals erfolgt.

## Claims

1. Method for setting up a connection between a base station and a radio communication terminal,
- in which the base station transmits a test signal to those radio communication terminals which are allocated to the base station for radio coverage,
- in which each receiving radio communication terminal allocates to the test signal transmission a quality value, the binary symbols of which comprise a first and a second symbol value,
- in which the radio communication terminals signal back, synchronously in time and beginning at a predetermined symbol position, symbol values of the respectively associated quality values to the base station as follows:
a. that a radio communication terminal considered signals back a symbol value if this corresponds to the first symbol value,
b. that the radio communication terminal considered, for the case of a second symbol value to be signalled back, monitors the symbol value signalling-back of other radio communication terminals, wherein the radio communication terminal considered ends the symbol value signalling-back if first symbol values are signalled back by the other radio communication terminals and otherwise the radio communication terminal considered continues the symbol value signalling-back,
- in which a connection between the base station and the radio communication terminal which was the last one to signal back a symbol value corresponding to the first symbol value to the base station is set up.

2. Method according to Claim 1, in which a useful signal/interference signal ratio and/or a carrier signal/interference signal ratio is used as quality value, the test signal being used as useful signal and/or as carrier signal.

3. Method according to Claim 1, in which the test signal of the base station is transmitted periodically repeatedly.

4. Method according to Claim 3, in which in each case an individual radiation pattern of a base station antenna is allocated to each test signal and coverage areas of the radiation patterns overlap at least partially.

5. Method according to Claim 3, in which the test signal is transmitted as part of an opportunistic beamforming method.

6. Method according to Claim 1, in which, in the case where at least two radio communication terminals allocate an identical first quality value to the test signal transmission, the corresponding radio communication terminals in each case select as second quality value a random number or a priority number or an address and signal this back symbol by symbol to the base station in a second method pass and the connection is set up on the basis of the symbols of the second quality value signalled back.

7. Method according to one of the preceding claims, in which each radio communication terminal signals back the respective first symbol value to the base station during a bit period, the bit period being selected in such a manner that the reception of the symbol value signalled back, both by the base station and by the receiving radio communication terminals, is ensured.

8. Method according to one of the preceding claims,
- in which the base station, together with the test signal, transmits information which defines the radio communication terminals for which a message transmission is present, and
- in which only the radio communication terminals defined in the information signal back the quality value symbol by symbol.

9. Method according to one of the preceding claims, in which the signalling-back of the first symbol value is carried out by using a multiple-access method.

10. Method according to one of the preceding claims, in which the first symbol value is signalled back by a transmission of a previously known signal.

## Revendications

1. Procédé pour l'établissement d'une liaison entre une station de base et un terminal de radiocommunication,
- dans lequel la station de base transmet un signal test aux terminaux de radiocommunication qui sont attribués à la station de base pour l'alimentation radio,
- dans lequel chaque terminal de radiocommunication récepteur attribue à la transmission du signal test une valeur de qualité dont des symboles binaires comprennent une première et une seconde valeurs de symbole,
- dans lequel les terminaux de radiocommunication accusent réception de façon synchrone et en commençant par une première position de symbole prédéfinie des valeurs de symbole des valeurs de qualité respectivement attribuées de la façon suivante à la station de base:
a) de telle sorte qu'un terminal de radiocommunication considéré accuse réception d'une valeur de symbole lorsque celle-ci correspond à la première valeur de symbole,
b) de telle sorte que le terminal de radiocommunication considéré contrôle l'accusé de réception de valeur de symbole d'autres terminaux de radiocommunication pour le cas d'une seconde valeur de symbole qui doit faire l'objet d'un accusé de réception, le terminal de radiocommunication considéré terminant l'accusé de réception de valeur de symbole si des premières valeurs de symbole font l'objet d'un accusé de réception par les autres terminaux de radiocommunication, et autrement le terminal de radiocommunication considéré poursuit l'accusé de réception de valeur de symbole,
- dans lequel une liaison est établie entre la station de base et le terminal de radiocommunication qui a accusé réception en dernier d'une valeur de symbole, qui correspond à la première valeur de symbole, à la station de base.

2. Procédé selon la revendication 1, dans lequel on utilise comme valeur de qualité un rapport signal utile/signal parasite et/ou un rapport signal porteur/signal d'interférence, le signal test étant utilisé comme signal utile et/ou comme signal porteur.

3. Procédé selon la revendication 1, dans lequel le signal test est envoyé de façon périodique et répétée à la station de base.

4. Procédé selon la revendication 3, dans lequel à chaque signal test est attribué respectivement un diagramme de rayonnement individuel d'une antenne de station de base et des zones de couverture des diagrammes de rayonnement se chevauchant au moins partiellement.

5. Procédé selon la revendication 3, dans lequel le signal test est envoyé comme partie d'un procédé de "Opportunistic Beamforming".

6. Procédé selon la revendication 1, dans lequel, dans le cas où au moins deux terminaux de radiocommunication attribuent une première valeur de qualité identique à la transmission du signal test, les terminaux de radiocommunication correspondants choisissent comme seconde valeur de qualité à chaque fois un nombre aléatoire ou un nombre de priorité ou une adresse et accusent réception de cette valeur dans un second passage de procédé à titre de symbole à la station de base et l'établissement de la liaison s'effectue sur la base des symboles notifiés en retour de la seconde valeur de qualité.

7. Procédé selon l'une quelconque des revendications précédentes, dans lequel chaque terminal de radiocommunication accuse réception de la première valeur de symbole respective pendant une durée de temps de bit à la station de base, la durée de temps de bit étant choisie de telle sorte qu'aussi bien la réception de la valeur de symbole identifiée en retour par la station de base que par les terminaux de radiocommunication récepteurs est garantie.

8. Procédé selon l'une quelconque des revendications précédentes,
- dans lequel la station de base transmet en même temps que le signal test une information qui définit pour quels terminaux de radiocommunication on a une transmission de messages, et
- dans lequel seuls les terminaux de radiocommunication définis dans l'information accusent réception de la valeur de qualité à titre de symbole.

9. Procédé l'une quelconque des revendications précédentes, dans lequel l'accusé de réception de la première valeur de symbole est effectué en utilisant un procédé d'accès multiple.

10. Procédé selon l'une quelconque des revendications précédentes, dans lequel l'accusé de réception de la première valeur de symbole s'effectue par une transmission d'un signal déjà connu.
